# EUROPEAN PATENT APPLICATION

(11) **EP 1 523 159 A2**
(43) Date of publication of application: **13.04.2005**
(21) Application number: 04023673.9
(22) Date of filing: 05.10.2004
(51) Int. Cl.: H04M 1/725, H04M 1/73

(54) **Mobile telephone and operation control method therefor**

(30) Priority: 07.10.2003 JP 2003348123
(71) Applicant: NEC CORPORATION, Tokyo (JP)
(72) Inventor: Higuchi, Norihiko, Kakegawa-shi, Shizuoka (JP)
(74) Representative: Glawe, Delfs, Moll & Partner

(57) **Abstract**

A CPU limits the operation of a television receiver unit, and permits the operation of a mobile telephone radio-communication unit when a battery's voltage is lower than the threshold (operation control threshold) stored in memory.

## Description

### BACKGROUND OF THE INVENTION

### 1. Field of the Invention:

The present invention relates to a mobile telephone and an operation control method therefor, and more particularly, to a mobile telephone including a television receiver unit and a mobile telephone radio-communication unit, and an operation control method therefor.

### 2. Description of the Related Art:

In recent years, mobile telephones have been proposed that are equipped with a variety of additional functions.

JP-8-162909-A discloses a mobile telephone that has a function of receiving broadcast programs of television, radio or the like.

JP-2002-354375-A discloses techniques related to a reduction in power consumption of a device having a television receiver unit. Specifically, JP-2002-354375-A describes that a television receiving function and a radio receiving function are limited step by step based on the remaining amount of battery at the time the device is powered on.

When television broadcasting is received by a mobile telephone as described in JP-8-162909-A, problems can occur because of high power . consumption when the television receiver unit is operating. Specifically, in mobile telephones having a television receiving function, battery capacity is rapidly consumed when the television receiving function is used. It is therefore contemplated that certain telephone capabilities, which are basic functions of the mobile telephone, become unuseable due to a reduction in the remaining amount of battery power caused by the use of the television receiving function.

Power consumption reduction techniques described in JP-2002-354375-A are not related to mobile telephones. Therefore, power consumption reduction techniques described in JP-2002-354375-A are incapable of solving a problem that telephone capabilities become unuseable due to rapid consumption of battery capacity caused by the use of the television receiving function.

### SUMMARY OF THE INVENTION

It is an object of the present invention to provide a mobile telephone and an operation control method therefor which are capable of maintaining mobile telephone capabilities for a long time even if the remaining amount of battery is reduced.

To achieve the above object, a mobile telephone, according to the present invention, comprises a television receiver unit, a mobile telephone radio-communication unit, a current status detector for detecting the current status of said mobile telephone; and an operation controller for limiting the operation of said television receiver unit and for permitting the operation of said mobile telephone radio-communication unit in accordance with the current status detected by said current status detector.

According to the present invention, based on the current status of a mobile telephone including a television receiver unit and a mobile telephone radio-communication unit, the mobile telephone limits the operation of the television receiver unit, while permitting the operation of the mobile terminal radio-communication unit. It is therefore possible to reduce the power consumed by the operation of the television receiver unit. Consequently, the mobile telephone radio-communication unit, which performs basic functions of the mobile telephone, can be operated for an extended time.

When the supply voltage of the mobile telephone is detected to be lower than a previously set, predetermined value, the mobile telephone preferably limits operation of the television receiver unit, or part of the operation, while permitting operation of the mobile telephone radio-communication unit. In this manner, when the remaining amount of battery power is reduced, it is possible to limit power consumed by the television receiver unit. Therefore, even if the remaining amount of battery power is reduced, the mobile telephone radio-communication unit can be operated for an extended time.

The previously set predetermined value is preferably equal to a voltage value that is required for the mobile telephone radio-communication unit to operate for a predetermined time or more. In this manner, even if the remaining amount of battery power is reduced, the mobile terminal radio-communication unit can be operated for the predetermined time or longer.

When the movement (speed) of the mobile telephone is detected to be higher than a predetermined value (i.e. speed), the mobile telephone preferably limits the operation of the television receiver unit or part of the operation, while permitting the operation of the mobile telephone radio-communication unit. In this manner, when the mobile telephone is moved at a higher speed that degrades the operation characteristics of the television receiver unit due to image fading, it is possible to prevent wasteful displaying of a degraded television image. It is thus possible to limit the wasteful consumption of power in performing this operation.

For example, the part of the operation of the television receiver unit is the operation of a television tuner.

When the television receiver unit includes a display for receiving a television image and an audio generator for generating television sound, the mobile telephone preferably limits operation of the display, while permitting operation of the audio generator, in accordance with the current status of the mobile telephone. In this manner, since operation of the display is limited, power consumption can be reduced. Further, since operation of the audio generator is permitted, the user can confirm part of the contents of the television broadcast.

Also, in accordance with the current status of the mobile telephone, the mobile telephone preferably performs, in sequence, a procedure for limiting operation of the display unit and for permitting operation of the audio generator and mobile telephone radio-communication unit, and a procedure for limiting operation of the display and audio generator and for permitting operation of the mobile telephone radio-communication unit. In this manner, operation of the television receiver unit can be limited step by step.

Preferably, the mobile telephone further includes a display, and the operation controller indicates on the display that the supply voltage is reduced.

According to the present invention, the mobile telephone automatically limits operation of the television receiver. Therefore, when the mobile telephone has reduced battery capacity, the television receiver unit is prevented from rapidly consuming the battery power. Consequently, the mobile telephone radio-communication unit can be operated for an extended time.

Also, the mobile telephone automatically stops part of the operation of the television receiver. It is therefore possible to reduce the amount of current that is consumed for operating the television receiver unit. Thus, the mobile telephone radio-communication unit and also the television receiver unit can be operated for an extended time, as compared with when the operation of the television receiver unit is not limited.

The above and other objects, features, and advantages of the present invention will become apparent from the following description with reference to the accompanying drawings that illustrate an example of the present invention.

### BRIEF DESCRIPTION OF THE DRAWINGS

Fig. 1 is a block diagram illustrating a mobile telephone according to one embodiment of the present invention;
Fig. 2 is an explanatory diagram illustrating an exemplary display of the remaining amount of battery capacity;
Fig. 3 is a flow chart for describing an exemplary operation of the mobile telephone according to the present invention; and
Fig. 4 is a flow chart for describing another exemplary operation of the mobile telephone according to the present invention.

### DETAILED DESCRIPTION OF PREFERRED EMBODIMENTS

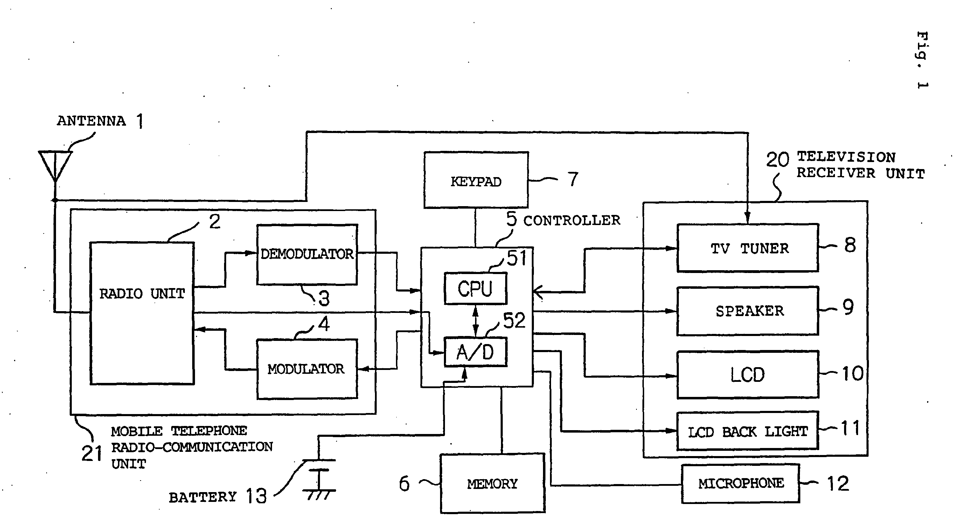

Fig. 1 is a block diagram illustrating a mobile telephone according to one embodiment of the present invention.

In Fig. 1, the mobile telephone comprises antenna 1, controller 5, memory 6, keypad 7, microphone 12, television receiver unit 20, and mobile telephone radio-communication unit 21.

Controller 5 includes CPU 51 and A/D converter 52. CPU 51 controls the operation of controller 5.

Television receiver unit 20 comprises TV (television) tuner 8, speaker 9 as an audio generator, LCD 10, and LCD back light 11.

Mobile telephone radio-communication unit 21 includes radio unit 2, demodulator 3, and modulator 4. The mobile telephone illustrated in Fig. 1 is powered by battery 13 for its operations.

Antenna 1 receives a mobile telephone signal transmitted from a base station (not shown). Radio unit 2 amplifies the mobile telephone signal received by antenna 1. Demodulator 3 demodulates the mobile telephone signal amplified by radio unit 2. Controller 5, which comprises a computer, decodes the mobile telephone signal demodulated by demodulator 3.

When decoded information is speech information, controller 5 directs speech, represented by the speech information, to speaker 9 for reproduction. On the other hand, when decoded information is image information such as characters, controller 5 directs the image, represented by the image information, to LCD 10, which serves as a display, for displaying the image.

Controller 5 also encodes the transmission signal representative of sound that has entered from microphone 12. Controller 5 further encodes the transmission signal that represents information entered through keypad 7 by the user.

Modulator 4 modulates the transmission signal encoded by controller 5.

Radio unit 2 amplifies the transmission signal modulated by modulator 4, and transmits the amplified transmission signal from antenna 1.

Radio unit 2 also delivers an RSSI (Received Signal Strength Indicator) signal to controller 5. The RSSI signal represents a voltage output that varies in response to the strength of an electric field of a signal received by radio unit 2. Controller 5 converts the voltage of the RSSI signal to digital data in A/D converter 52. Controller 5 detects a speed of movement of the mobile telephone using the RSSI signal.

Controller 5 detects a voltage of battery 13 using A/D converter 52. In this embodiment, controller 5, specifically CPU 51, detects the voltage of battery 13 at every predetermined time using A/D converter 52.

Memory 6 is a recording medium that can be read by the computer. Memory 6 stores an operation program for the mobile telephone, and also stores set data including a threshold for battery voltage detection (hereinafter called the "threshold").

In this embodiment, memory 6 stores a plurality of thresholds. One of the plurality of thresholds is an operation control threshold which indicates a voltage value that corresponds to the remaining amount of battery power with which a telephone call can be made for a predetermined time or longer using mobile telephone radio-communication unit 21. More specifically, the operation control threshold is set based on the remaining amount of battery power that permits a certain degree of call time. In this embodiment, the operation of television receiver unit 20 is limited when the voltage of battery 13 is lower than the operation control threshold.

Controller 5, specifically CPU 51, reads the operation program stored in memory 6. Subsequently, controller 5 (CPU 51) executes the operation program.

The operation program stored in memory 6 causes CPU 51 to execute processing for limiting operation of television receiver 20 and for permitting operation of mobile telephone radio-communication unit 21 when the voltage of battery 13 is lower than the threshold (operation control threshold) stored in memory 6.

Alternatively, the operation program stored in memory 6 may cause CPU 51 to execute processing for limiting operation of television receiver unit 20 and for permitting operation of mobile telephone radio-communication unit 21 when the movement (speed) of the mobile telephone detected by controller 5 using the RSSI signal, is equal to or higher than a predetermined value previously set in memory 6. In this event, operation of television receiver unit 20 is limited when the movement (speed) of the mobile telephone is equal to or higher than the predetermined value.

Keypad 7 is a user interface through which the user enters data.

Television tuner 8 demodulates and amplifiers a television signal received by antenna 1. Television tuner 8 delivers an image signal and an audio signal in accordance with the television signal to controller 5.

Controller 5 receives the audio signal and image signal delivered from television tuner 8. Controller 5 delivers the received audio signal to speaker 9. Also, controller 5 delivers the received image signal to LCD 10.

Speaker 9 generates sound represented by the audio signal that is delivered from controller 5. LCD 10 displays an image represented by the image signal that is delivered by controller 5. LCD back light 11 illuminates LCD 10 from the back thereof. LCD back light 11 is turned on and off under control of controller 5. Microphone 12 receives speech of the user, and generates a signal representative of the received speech to controller 5.

Battery 13 is a power source for the mobile telephone. Controller 5 detects the voltage of battery 13 using A/D converter 52. Controller 5 displays the remaining amount of power in battery 13 on LCD 10 based on the detected voltage of battery 13.

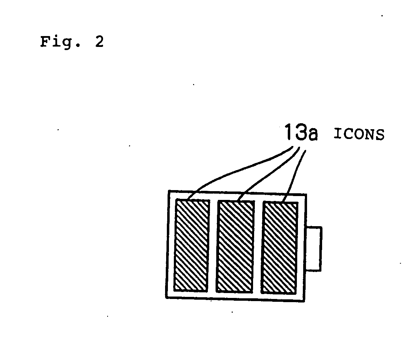

Fig. 2 is an explanatory diagram illustrating an exemplary display of the remaining amount of power in battery 13.

In Fig. 2, icons 13a indicate the remaining amount of power in battery 13.

Controller 5 detects a remaining amount of power of battery 13. Specifically, controller 5 compares the detected voltage of battery 13 with a threshold previously stored in memory 6. Based on the result of the comparison, controller 5 detects the remaining amount of power in battery 13.

In Fig. 2, the remaining amount of power of battery 13 is displayed in three stages with icons 13a. In this embodiment, three thresholds (hereinafter called the "remaining amount of battery power display thresholds") have been previously stored in memory 6. The three remaining amount of battery power display thresholds should be different values from one another.

Therefore, in this embodiment, three remaining amount of battery power display thresholds have been previously stored in memory 6.

As the voltage value of battery 13 gradually falls below the three remaining amount of battery power display threshold values, in sequece, controller 5 reduces the number of displayed icons 13a from three to two, from two to one, and from one to zero, in sequence.

Also, when the number of displayed icons 13a is reduced from one to zero, in other words, when the voltage of battery 13 falls below the lowest remaining amount of battery power display threshold of the three remaining amount of battery power display thresholds, controller 5 displays on LCD 10 that the voltage of battery 13 has become lower. Controller 5 notifies the user, through the display, of the need to recharge battery 13. Subsequently, controller 5 automatically powers off the mobile telephone.

In this embodiment, the operation control threshold is set at a value higher than the lowest one of the three remaining amount of battery power display thresholds and lower than the middle one of the three remaining amount of battery power display thresholds.

Therefore, controller 5 limits operation of television receiver unit 20 before the number of displayed icons 13a is reduced to zero. For example, if the voltage of battery 13 falls below the operation control threshold while television receiver unit 20 is operating, controller 5 controls television receiver 20 to stop the operation. In this way, the capacity of battery can be prevented from being used up while the television receiver unit 20 is operating.

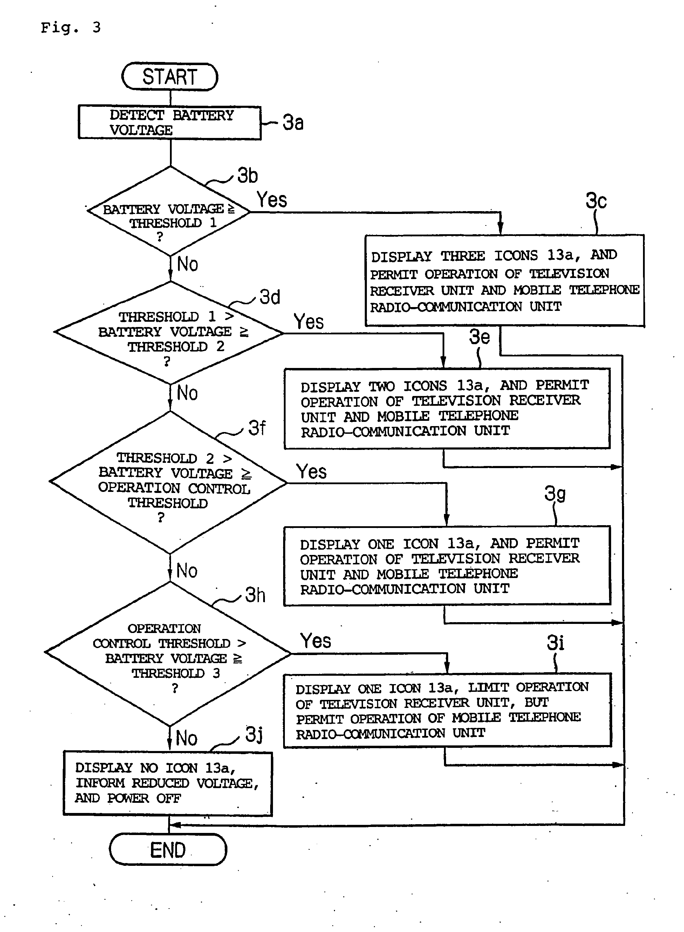

Fig. 3 is a flow chart for describing the operation of the mobile telephone.

In the following, the operation of the mobile telephone will be described with reference to Fig. 3. CPU 51 executes the operation illustrated in Fig. 3 at predetermined time intervals.

At step 3a, A/C converter 52 detects the voltage of battery 13. As A/D converter 52 detects the voltage of battery 13, CPU 51 compares the detected voltage with the three remaining amount of battery power display thresholds and one operation control threshold stored in memory 6.

Specifically, CPU 51 first executes step 3b when A/D converter 52 detects the voltage of battery 13.

At step 3b, CPU 51 determines whether or not the voltage value of battery 13 is equal to or higher than the highest one of the three remaining amount of battery power display thresholds (hereinafter called "threshold 1").

When the voltage value of battery 13 is equal to or higher than threshold 1, CPU 51 executes step 3c. Conversely, when the voltage value of battery 13 is lower than threshold 1, CPU 51 executes step 3d.

At step 3c, CPU 51 displays three icons 13a on LCD 10. Further, at step 3c, CPU 51 permits the operation of both television receiver unit 20 and mobile telephone radio-communication unit 21.

At step 3d, CPU 51 determines whether or not the voltage value of battery 13 is lower than threshold 1 and equal to or higher than the middle one (hereinafter called "threshold 2") of the three remaining amount of battery power display thresholds.

When the voltage value of battery 13 is lower than threshold 1 and equal to or higher than threshold 2, CPU 51 executes step 3e. Conversely, when the voltage value of battery 13 is lower than threshold 2, CPU 51 executes step 3f.

At step 3e, CPU 51 displays two icons 13a on LCD 10. Further, at step 3e, CPU 51 permits the operation of both television receiver unit 20 and mobile telephone radio-communication unit 21.

At step 3f, CPU 51 determines whether or not the voltage value of battery 13 is lower than threshold 2 and equal to or higher than the operation control threshold.

When the voltage value of battery 13 is lower than threshold 2 and equal to or higher than the operation control threshold, CPU 51 executes step 3g. Conversely, when the voltage value of battery 13 is lower than the operation control threshold, CPU 51 executes step 3h.

At step 3g, CPU 51 displays one icon 13a on LCD 10. Further, at step 3g, CPU 51 permits the operation of both television receiver unit 20 and mobile telephone radio-communication unit 21.

At step 3h, CPU 51 determines whether or not the voltage value of battery 13 is lower than the operation control threshold and equal to or higher than the lowest one (hereinafter called "threshold 3") of the three remaining amount of battery power display thresholds.

When the voltage value of battery 13 is lower than the operation control threshold and equal to or higher than threshold 3, CPU 51 executes step 3i. Conversely, when the voltage value of battery 13 is lower than threshold 3, CPU 51 executes step 3j.

At step 3i, CPU 51 displays one icon 13a on LCD 10. Further, at step 3i, CPU 51 prohibits the supply of voltage to television receiver unit 20, i.e., limits operation of television receiver unit 20, while permitting operation of mobile telephone radio-communication unit 21.

At step 3j, CPU 51 prohibits LCD 10 from displaying icon 13a. Further, at step 3j, CPU 51 displays on LCD 10 that the voltage of battery 13 has become lower. With this display, controller 5 notifies the user of the need to recharge battery 13. Subsequently, controller 5 automatically powers off the mobile telephone.

In this embodiment, when the voltage of battery 13 falls below the operation control threshold, CPU 51 limits the operation of television receiver unit 20 but permits the operation of mobile telephone radio-communication unit 21. It is therefore possible to prevent the capacity of battery 13 from being rapidly consumed due to the operation of television receiver unit 20 when the voltage of battery 13 falls below the operation control threshold. Thus, mobile telephone radio-communication unit 21, which performs the basic functions of the mobile telephone, can be operated for a longer time when the remaining amount of battery power is reduced.

Also, the operation control threshold is set at a voltage value of battery 13 that is required for mobile telephone radio-communication unit 21 to operate for a predetermined time. Therefore, even if the remaining amount of power of battery 13 is reduced, mobile telephone radio-communication unit 21 can be operated for a predetermined time or longer.

In the foregoing embodiment, the operation of television receiver unit 20 is fully stopped when the voltage of battery 13 falls below the operation control threshold.

However, controller 5 may permit the operation of mobile telephone radio-communication unit 21 and prohibit part of the operation of television receiver unit 20, for example, when the voltage of battery 13 falls below the operation control threshold. Part of the operation of television receiver unit 20 may include, for example, the operation of television tuner 8, or operation of speaker 9, or image display operation of LCD 10, or operation of LCD back light 11, or operation of LCD 10 and LCD back light 11.

In this event, when the voltage of battery 13 falls below the operation control threshold, the current that is consumed by television receiver unit 20 is reduced. It is therefore possible to permit the mobile telephone radio-communication unit 21 and television receiver 20 to operate for an extended time, as compared with when the operation of television receiver unit 20 is not limited at all.

In the television receiver unit 20, as an image is displayed on LCD 10 in accordance with an image signal supplied from controller 5, LCD back light 11 is lit. Also, in television receiver unit 20, sound is generated from speaker 5 in accordance with an audio signal supplied from controller 5.

Bearing the foregoing in mind, television receiver unit 20 may be controlled, for example, such that when the voltage of battery 13 falls below the operation control threshold, CPU 51 may turn off LCD 10 and LCD back light 11 in order to stop the image display function of television receiver unit 20 and permit television broadcasting sound to be generated from speaker 9. With this strategy, current consumed by television receiver unit 20 can be reduced when the voltage of battery 13 falls below the operation control threshold.

Another new operation control threshold (hereinafter called the "additional operation control threshold", which is lower than the existing operation control threshold) may be additionally stored in memory 6. In this event, when the voltage of battery 13 falls below the existing operation control threshold and is equal to or higher than the additional operation control threshold, CPU 51 preferably limits the operation of the display (LCD 10 and LCD back light 11), and permits the operation of speaker 10 and mobile telephone radio-communication unit 21. CPU 51, for example, stops powering LCD 10 and LCD back light 11 to limit the operation of LCD 10 and LCD back light 11.

Also, when the voltage of battery 13 falls below the additional operation control threshold, CPU 51 may control television receiver unit 20 to limit all operations of television receiver unit 20 (for example, by stopping the power supplied to television receiver unit 20), and to permit the operation of mobile telephone radio-communication unit 21.

The operation for limiting the display of images on LCD 10 and LCD back light 11 and for permitting television broadcasting sound to be generated from speaker 9, may not only be controlled automatically by CPU 51, based on the voltage of battery 13, but also executed when the user manipulates the keypad 7.

During high-speed travel by a bullet train or the like, the operation characteristics of television receiver unit 20 can be largely degraded due to the influence of fading and the like. In particular, during high-speed movement, the image is more significantly degraded than sound.

When an image is degraded due to high-speed movement, battery current is wastefully consumed to display such a degraded image. Therefore, when the speed of movement is determined to be a predetermined speed or higher, CPU 51 may control television receiver unit 20 to stop displaying an image on television receiver unit 20 (specifically, an image displayed by LCD 10 and LCD back light 11) and to generate sound alone from television receiver unit 20 (specifically from speaker 9).

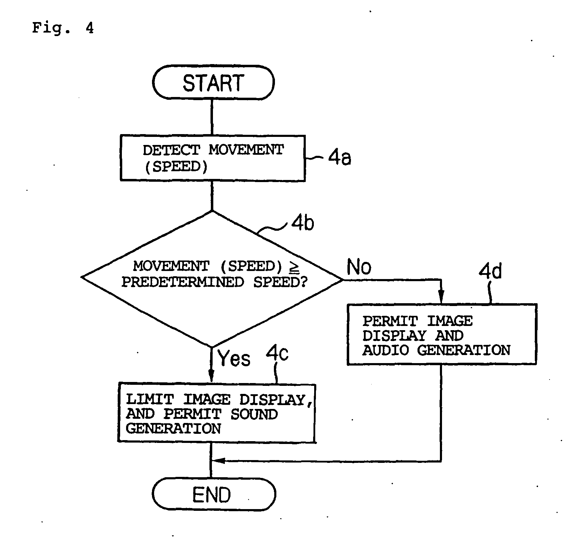

Fig. 4 is a flow chart for describing the operation of CPU 51, when the mobile telephone is moving at a predetermined speed or higher, for limiting television receiver unit 20 from displaying images and for generating just sound from television receiver unit 20.

In the following, the operation will be described with reference to Fig. 4.

In the mobile telephone, the RSSI signal is captured through radio unit 2.

At step 4a, CPU 51 calculates the fading pitch by inputting the change in the RSSI signal into a known formula. CPU 51 detects the movement (speed) of the mobile telephone based on the calculated fading pitch. It should be noted that the method for detecting movement (speed) of a mobile telephone using an RSSI signal is known. Therefore, detailed description on the detecting method is omitted. CPU 51 executes step 4b after it has detected the movement (speed) of the mobile telephone.

At step 4b, CPU 51 determines whether or not the detected movement (speed) is equal to or higher than a predetermined speed previously stored in memory 6. CPU 51 executes step 4c when the movement (speed) of the mobile telephone is equal to or higher than the predetermined speed. Conversely, CPU 51 executes step 4d when the movement (speed) of the mobile telephone is lower than the predetermined speed.

At step 4c, CPU 51 controls television receiver unit 20 to turn off LCD 10 and LCD back light 11 in order to limit the image display (for example, by powering off LCD 10 and LCD back light 11) and to generate just sound from speaker 9. At step 4c, CPU 51 permits the operation of mobile telephone radio-communication unit 21.

At step 4d, CPU 51 permits image display and sound generation. At step 4d, CPU 51 also permits the operation of mobile telephone radio-communication unit 21.

It should be noted that part of the operation of the television receiver unit 20 limited by CPU 51 at step 4c is not limited to the image display operation, but can be modified as required. For example, part of the operation of television receiver unit 20 that is limited by CPU 51 at step 4c may be the operation of television tuner 8, or the operation of speaker 9, or the image display operation of LCD 10, or the operation of LCD back light 11, or the operation of LCD 10 and LCD back light 11.

Alternatively, when the detected movement (speed) of the mobile telephone is equal to or higher than the predetermined speed, CPU 51 may limit the operation of television receiver unit 20 (for example, by powering off television receiver unit 20), and permit the operation of mobile telephone radio-communication unit 21.

According to this embodiment, CPU 51 automatically limits the operation of television receiver unit 20. The capacity of battery 13 of the mobile telephone can therefore be prevented from being rapidly consumed by operation of television receiver unit 20. Consequently, mobile telephone radio-communication unit 21 can be operated for a longer time.

Also, CPU 51 automatically limits part of the operation of television receiver unit 20. It is therefore possible to reduce the amount of current consumed to operate television receiver unit 20. Consequently, the mobile telephone radio-communication unit 21 and television receiver 20 can operate for an extended time, as compared with when the operation of television receiver unit 20 is not limited at all.

In the embodiments described above, the illustrated configuration is a simple example, and the present invention is not limited to that configuration.

For example, the display of television receiver unit 20 is not limited to LCD, but may be changed as required.

Also, the number of battery remaining amount display thresholds is not limited to three but may be increased or decreased to suit a particular application. Likewise, the number of operation control thresholds can be changed as required.

Further, the detection of the movement (speed) of the mobile telephone is not limited to the detection that relies on the RSSI signal delivered from the radio unit 2, but may be made by any appropriate method.

While a preferred embodiment of the present invention has been described using specific terms, such description is for illustrative purposes only, and it is to be understood that changes and variations may be made without departing from the spirit or scope of the following claims.

## Claims

1. A mobile telephone capable of receiving television broadcasting, comprising:
a television receiver unit;
a mobile telephone radio-communication unit;
a current status detector for detecting a current status of said mobile telephone; and
an operation controller for limiting an operation of said television receiver unit and for permitting the operation of said mobile telephone radio-communication unit in accordance with the current status detected by said current status detector.

2. The mobile telephone according to claim 1, wherein:
said current status detector detects the current status of a supply voltage to said mobile telephone; and
said operation controller limits the operation of said television receiver unit and permits the operation of said mobile telephone radio-communication unit when said current status detector detects that the supply voltage to said mobile telephone is lower than a previously set predetermined value.

3. The mobile telephone according to claim 1, wherein:
said current status detector detects the current status of a supply voltage to said mobile telephone; and
said operation controller limits part of the operation of said television receiver unit and permits the operation of said mobile telephone radio-communication unit when said current status detector detects that the supply voltage to said mobile telephone is lower than a predetermined value.

4. The mobile telephone according to claim 3, wherein:
said television receiver unit includes a television tuner; and
said part of the operation of said television receiver unit is the operation of said television tuner.

5. The mobile telephone according to claim 2, wherein said previously set predetermined value is equal to a voltage value of the power supply that is required for said mobile telephone radio-communication unit to operate for a predetermined time or more.

6. The mobile telephone according to claim 3, wherein said previously set predetermined value is equal to a voltage value of the power supply required for said mobile telephone radio-communication unit to operate for a predetermined time or more.

7. The mobile telephone according to claim 2, further comprising a display,
wherein said operation controller displays on said display that the supply voltage is reduced.

8. The mobile telephone according to claim 3, further comprising a display,
wherein said operation controller displays on said display that the supply voltage is reduced.

9. The mobile telephone according to claim 1, wherein:
said current status detector detects a current speed of movement of said mobile telephone; and
said operation controller limits the operation of said television receiver unit and permits the operation of said mobile telephone radio-communication unit when said current status detector detects that the speed of movement of said mobile telephone is equal to or higher than a predetermined value.

10. The mobile telephone according to claim 1, wherein:
said current status detector detects a current speed of movement of said mobile telephone; and
said operation controller limits part of the operation of said television receiver unit and permits the operation of said mobile telephone radio-communication unit when said current status detector detects that the speed of movement of said mobile telephone is equal to or higher than a predetermined value.

11. The mobile telephone according to claim 10, wherein:
said television receiver unit includes a television tuner,
wherein said part of the operation of said television receiver unit is the operation of said television tuner.

12. The mobile telephone according to claim 1, wherein:
said television receiver unit includes a display for displaying a television image, and an audio generator for generating television sound; and
said operation controller limits the operation of said display and permits the operation of said audio generator in accordance with the current status detected by said current status detector.

13. The mobile telephone according to claim 12, wherein said operation controller executes, in sequence, a procedure for limiting the operation of said display and for permitting the operation of said audio generator and said mobile telephone radio-communication unit, and a procedure for limiting the operation of said display and said audio generator and for permitting the operation of said mobile telephone radio-communication unit in accordance with the current status detected by said current status detector.

14. An operation control method performed by a mobile telephone including a television receiver unit and a mobile telephone radio-communication unit, said method comprising:
a current status detecting step for detecting a current status of said mobile telephone; and
an operation control step for limiting an operation of said television receiver unit and for permitting an operation of said mobile telephone radio-communication unit in accordance with the current status detected at said current status detecting step.

15. The operation control method according to claim 14, wherein:
said current status detecting step detects a current supply voltage of said mobile telephone; and
said operation control step limits the operation of said television receiver unit and permits the operation of said mobile telephone radio-communication unit when the supply voltage of said mobile telephone detected at said current status detecting step is lower than a previously set predetermined value.

16. The operation control method according to claim 14, wherein:
said current status detecting step detects a current supply voltage of said mobile telephone; and
said operation control step limits part of the operation of said television receiver unit and permits the operation of said mobile telephone radio-communication unit when the supply voltage of said mobile telephone detected at said current status detecting step is lower than a previously set predetermined value.

17. The operation control method according to claim 16, wherein:
said television receiver unit includes a television tuner,
wherein said part of the operation of said television receiver unit is the operation of said television tuner.

18. The operation control method according to claim 15, wherein:
said previously set predetermined value is equal to a voltage value of the power supply required for said mobile telephone radio-communication unit to operate for a predetermined time or more.

19. The operation control method according to claim 16, wherein:
said previously set predetermined value is equal to a voltage value of the power supply required for said mobile telephone radio-communication unit to operate for a predetermined time or more.

20. The operation control method according to claim 15, wherein:
said television receiver unit includes a display, and
said method further comprises a display step for displaying on said display that the supply voltage is reduced.

21. The operation control method according to claim 16, wherein:
said television receiver unit includes a display, and
said method further comprises a display step for displaying on said display that the supply voltage is reduced.

22. The operation control method according to claim 14, wherein:
said current status detecting step detects a current speed of movement of said mobile telephone; and
said operation control step limits the operation of said television receiver unit and permits the operation of said mobile telephone radio-communication unit when the speed of movement of said mobile telephone that is equal to or higher than a previously set predetermined value is detected at said current status detecting step.

23. The operation control method according to claim 14, wherein:
said current status detecting step detects a current speed of movement of said mobile telephone; and
said operation control step limits part of the operation of said television receiver unit and permits the operation of said mobile telephone radio-communication unit when the speed of movement of said mobile telephone that is equal to or higher than a previously set predetermined value is detected at said current status detecting step.

24. The operation control method according to claim 23, wherein:
said television receiver unit includes a television tuner,
wherein said part of the operation of said television receiver unit is the operation of said television tuner.

25. The operation control method according to claim 14, wherein:
said television receiver unit includes a display for displaying a television image, and an audio generator for generating television sound; and
said operation control step limits an operation of said display and permits an operation of said audio generator in accordance with the current status detected by said current status detecting step.

26. The operation control method according to claim 25, wherein said operation control step executes, in sequence, a procedure for limiting the operation of display and for permitting the operation of said audio generator and said mobile telephone radio-communication unit, and a procedure for limiting the operation of said display and said audio generator and for permitting the operation of said mobile telephone radio-communication unit in accordance with the current status detected by said current status detecting step.
